# EUROPEAN PATENT SPECIFICATION

(11) **EP 3 706 382 B1**
(45) Date of publication and mention of the grant of the patent: **30.04.2025**
(21) Application number: 18881368.7
(22) Date of filing: 12.09.2018
(51) Int. Cl.: H04L 67/133, H04L 69/08, G06F 9/54

(54) **METHOD AND DEVICE FOR IMPLEMENTING REMOTE PROCEDURE CALL**
VERFAHREN UND VORRICHTUNG ZUR IMPLEMENTIERUNG EINES AUFRUFS EINER ENTFERNTEN PROZEDUR
PROCÉDÉ ET DISPOSITIF PERMETTANT DE METTRE EN OEUVRE UN APPEL DE PROCÉDURE À DISTANCE

(30) Priority: 24.11.2017 CN 201711190700
(43) Date of publication of application: 09.09.2020
(73) Proprietor: ZTE Corporation, Shenzhen, Guangdong 518057 (CN)
(72) Inventor: WU, Shaoyong, Shenzhen Guangdong 518057 (CN); WANG, Yansong, Shenzhen Guangdong 518057 (CN); TIAN, Jian, Shenzhen Guangdong 518057 (CN); KE, Zhiyong, Shenzhen Guangdong 518057 (CN)
(74) Representative: Canzler & Bergmeier Patentanwälte Partnerschaft mbB
(86) International application number: PCT/CN2018/105323
(87) International publication number: WO 2019/100819

(56) References cited:
- WO-A1-2014/149767
- CN-A- 102 098 296
- CN-A- 102 262 560
- CN-A- 105 357 244
- CN-A- 105 471 726
- CN-A- 106 357 713
- US-A1- 2008 163 269
- US-B1- 9 660 877
- SUN MICROSYSTEMS ET AL: "RPC: Remote Procedure Call Protocol Specification Version 2; rfc1057.txt", RPC: REMOTE PROCEDURE CALL PROTOCOL SPECIFICATION VERSION 2; RFC1057.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 June 1988 (1988-06-01), XP015005998
- HALEPLIDIS E ET AL: "Software-Defined Networking (SDN): Layers and Architecture Terminology; rfc7426.txt", SOFTWARE-DEFINED NETWORKING (SDN): LAYERS AND ARCHITECTURE TERMINOLOGY; RFC7426.TXT, INTERNET ENGINEERING TASK FORCE, IETF; STANDARD, INTERNET SOCIETY (ISOC) 4, RUE DES FALAISES CH- 1205 GENEVA, SWITZERLAND, 7 January 2015 (2015-01-07), pages 1 - 35, XP015104526

## Description

### TECHNICAL FIELD

The present disclosure relates to, but is not limited to, Software Defined Networking (SDN) technologies.

### BACKGROUND

SDN is a novel network architecture with separate control and forwarding and programmable by software. The SDN architecture includes a centralized control plane and a distributed data plane. The SDN controller, as an objectified control plane, can sense all information on the network, process logic of the whole network, and realize various network protocols. The centralized control mode in the SDN architecture simplifies the traditional control and complex protocols distributed on various devices, and provides excellent management and evolution capabilities for network control and network evolution. The SDN controller is an important bridge between network applications and network infrastructure in the SDN architecture. Since the SDN controller can be programmed by software, flexible control and application innovation capacity of the network are provided so that the network can be quickly opened and flexibly adjusted.

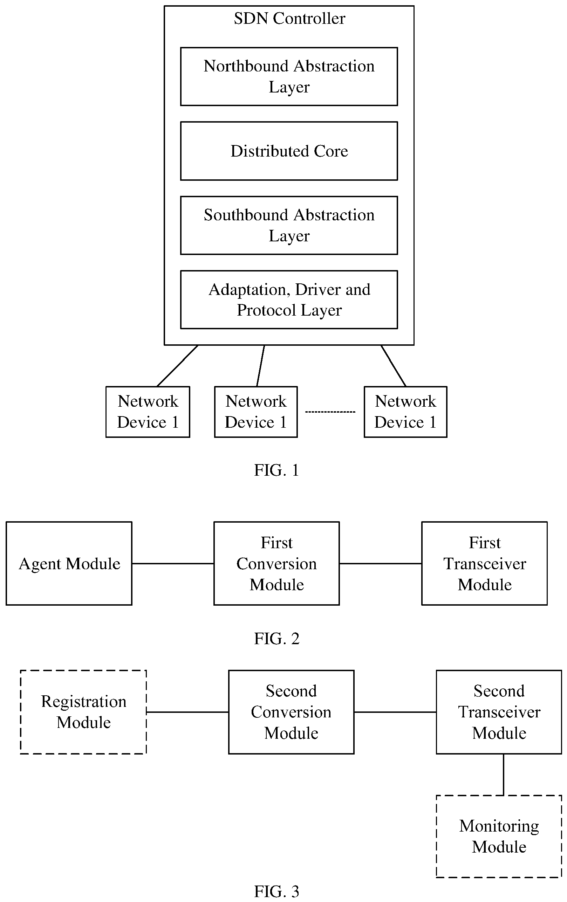

FIG. 1 is a schematic diagram illustrating constitution of an SDN controller in the existing art. As shown in FIG. 1, the SDN controller may be generally divided, according to a functional hierarchy, into a northbound abstraction layer, a distributed core, as well as a southbound abstraction layer, an adaptation, driver and protocol layer, and the like. Among that, the northbound abstraction layer, also known as the northbound interface abstraction layer, isolates applications from network details and can isolate applications from network events (e.g., connection interrupts). Accordingly, the SDN controller is isolated from applications and may manage requests from multiple competitive applications. From the service perspective, the provision of the northbound abstraction layer speeds up application development, and allows network changes without application downtime.

The distributed core provides inter-component communication, status management, leader election services, and the like. Thus, a plurality of components appear as one logical component. For applications, the distributed core layer shields network diversity. In addition, applications can learn a fault code of a components or data platform. These all greatly simplify the application development and fault handling process.

Various network applications (APPs) developed on the basis of the SDN controller are provided in the existing art. In development of an APP, a large amount of data needs to be efficiently interacted between the APP and the SDN controller, such as calling various network services provided by the northbound abstraction layer, and querying network topology and status, so as to implement corresponding network operation instructions, and make the network programmable by software.

An SDN controller is typically developed with a certain programming language such as JAVA. If an APP is developed with another programming language such as PYTHON, it is not possible to directly implement the interaction between the APP and the SDN controller across the programming languages. Moreover, if the APP and the SDN controller are distributed on different hosts, remote interaction across nodes cannot be performed, either.

U.S. patent application publication No. 2008/163269 A1 discloses remote procedure call system, remote procedure call method, program for implementing remote procedure call system. Input/output data classes defined based on an interface between a server and a client are embedded in a client application, and input/output data objects, which are instances of the input/output data classes, are generated when the client application calls a server application with a remote procedure call. When the client receives a reply message from the server, a data conversion for output parameters is not performed, and the output parameters are transferred unchanged to the data region of the output data object. Thereafter, when the client application references an output parameter, an obtainment process for the corresponding parameter of the output data object is called, the data conversion is performed only for the output parameter required for the obtainment process, and the value of the output parameter referenced by the client application is returned.

U.S. patent No. 9 660 877 B1 discloses transaction management in multi-protocol SDN controller. A multi-protocol software-defined networking (SDN) controller receives receiving from one or more applications one or more requests for services to be performed by one or more of a plurality of network devices that communicate with the SDN controller by a plurality of different of SDN protocols. The requests are mapped to appropriate ones of the plurality of different SDN protocols to fulfill the services of the requests. The SDN controller sends to the respective one or more of the plurality of network devices, control messages according to appropriate ones of the plurality of different SDN protocols. Responses are received at the SDN controller from the one or more of the plurality of network devices, each response indicating a failure or a success for a corresponding request. Failures and successes of the responses are associated with appropriate ones of the requests.

### SUMMARY

Embodiments of the present disclosure provide a method and system for implementing remote procedure call. The features of the method and system for implementing remote procedure call according to the present invention are defined in the independent claims, and the preferable features according to the present invention are defined in the dependent claims.

In an embodiment of the present disclosure, there is provided a device for implementing remote procedure call, including: an agent module, a first conversion module and a first transceiver module; wherein the agent module is configured to call a service interface of an SDN controller, and input and output parameters of the agent module are the same as actual service interface parameters on the SDN controller; the first conversion module is configured to convert a first input parameter, which conforms to an APP client programming language format, of a service interface provided by a client where the first conversion module is located into a second input parameter in a preset protocol format; and the first transceiver module is configured to convert the second input parameter into request information conforming to a remote procedure call protocol (RPC) and send the request information to the SDN controller.

In an embodiment of the present disclosure, there is further provided a device for implementing remote procedure call, including: a second transceiver module and a second conversion module; wherein the second transceiver module is configured to receive request information conforming to RPC from a client and convert the request information into a second input parameter in a preset protocol format; and the second conversion module is configured to convert the second input parameter into a third input parameter conforming to an SDN controller programming language format of a service interface provided by an SDN controller where the second conversion module is located.

In an embodiment of the present disclosure, there is further provided a method for implementing remote procedure call, including: calling, by a client, a service interface of an SDN controller and converting a first input parameter of the service interface into a second input parameter in a preset protocol format; and converting, by the client, the second input parameter into request information conforming to RPC and sending the request information to the SDN controller.

In an embodiment of the present disclosure, there is further provided a computer readable storage medium having a computer executable instruction stored thereon, wherein the computer executable instruction is configured to cause the method for implementing remote procedure call as described above to be performed.

In an embodiment of the present disclosure, there is further provided a device for implementing remote procedure call, including a processor and a storage; wherein the storage has stored therein a computer program executable on the processor; the processor is configured to, when executing the computer program, perform the method for implementing remote procedure call at the client side as described above.

In an embodiment of the present disclosure, there is further provided a method for implementing remote procedure call, including: converting, by an SDN controller, request information conforming to RPC from a client into a second input parameter in a preset protocol format; and converting, by the SDN controller, the second input parameter into a third input parameter of a service interface of the SDN controller.

In an embodiment of the present disclosure, there is further provided a computer readable storage medium having a computer executable instruction stored thereon, wherein the computer executable instruction is configured to cause the method for implementing remote procedure call as described above to be performed.

In an embodiment of the present disclosure, there is further provided a device for implementing remote procedure call, including a processor and a storage; wherein the storage has stored therein a computer program executable on the processor; the processor is configured to, when executing the computer program, perform the method for implementing remote procedure call at the SDN controller side as described above.

The technical solution of the embodiments of the present disclosure comprises at least the following steps: calling, by an APP client, a service interface of an SDN controller and converting an input parameter of the service interface into an input parameter in a preset protocol format; and converting, by the APP client, the input parameter converted into the preset protocol format into request information conforming to RPC and sending the request information to the SDN controller. The embodiments of the present disclosure realize direct interaction of the APP and the SDN controller across programming languages.

Other features and advantages of the present disclosure will be set forth in the description which follows, and will become apparent from the description at least partially, or be understood by implementing the present disclosure. Objects and other advantages of the disclosure may be realized and obtained by means of the structures particularly pointed out in the description, appended claims and drawings.

### BRIEF DESCRIPTION OF THE DRAWINGS

Accompanying drawings are provided for further understanding of the technical solution of the present disclosure and constitute a part of the specification. Hereinafter, these drawings are intended to explain the technical solution of the present disclosure together with the following embodiments.
FIG. 1 is a schematic diagram illustrating configuration of an SDN controller in the existing art;
FIG. 2 is a schematic diagram illustrating configuration of a first embodiment of the device for implementing remote procedure call according to the present disclosure;
FIG. 3 is a schematic diagram illustrating configuration of a second embodiment of the device for implementing remote procedure call according to the present disclosure;
FIG. 4 is a flowchart of a first embodiment of a method for implementing remote procedure call according to the present disclosure; and
FIG. 5 is a flowchart of a second embodiment of a method for implementing remote procedure call according to the present disclosure.

### DETAILED DESCRIPTION

For clarity and better understanding of the objects, technical solution and advantages of the present disclosure, embodiments of the present disclosure will now be described in detail in conjunction with the accompanying drawings. It should be noted that the embodiments of the present disclosure and features therein may be arbitrarily combined with each other without conflict.

FIG. 2 is a schematic diagram illustrating configuration of a first embodiment of the device for implementing remote procedure call according to the present disclosure. In the first embodiment, the device is provided on a client configured to install an APP client, and as shown in FIG. 2, the device includes at least: an agent module, a first conversion module and a first transceiver module. Here, the agent module is configured to call a service interface of an SDN controller, and input and output parameters of the agent module are the same in contents as actual service interface parameters on the SDN controller.

The APP client on the client does not have an actual SDN controller service interface, but the agent module shields interaction differences between the APP client using a non-controller programming language and the SDN controller. Therefore, by means of the agent module, calling of the service interface of the SDN controller is conveniently realized in the embodiment of the present disclosure.

The first conversion module is configured to convert a first input parameter of a service interface provided by a client where the first conversion module is located into a second input parameter in a preset protocol format.

Here, the input parameter of the service interface provided by the client conforms to an APP client programming language format.

In an embodiment, the preset protocol format may include, for example, a protobuf format, an Interface Definition Language (IDL) format, and a JavaScript Object Notation (JSON) format. Parameters identifiable by the preset protocol format are basic types, such as one or any combination of character strings, integers, floating point numbers, bytes, and Boolean types, but do not include pointer types.

The first transceiver module is configured to convert the second input parameter into request information conforming to RPC and send the same to the SDN controller.

In an embodiment, the client and the SDN controller may be disposed on the same physical device, or may be disposed on different physical devices. In the case that the client and the SDN controller are disposed on different physical devices, such as on different hosts, then the request information further includes: an address and an agreed port of the SDN controller, here, the agreed port is a preset port or a dynamically negotiated port.

With the device shown in FIG. 2 provided in the present disclosure, through a combined function of the first conversion module and the first transceiver module, the information conforming to the APP programming language format is converted into the preset protocol format to interact with the SDN controller, and the problem of interaction between the APP client on the client and the SDN controller across programming languages is effectively solved.

In an embodiment, in the device shown in FIG. 2, the first transceiver module is further configured to: receive reply information conforming to RPC from the SDN controller and convert the reply information conforming to RPC into the second output parameter in the preset protocol format. Accordingly, the first conversion module is further configured to: further convert the second output parameter into the first output parameter conforming to the APP client programming language format, and output the same to the agent module.

Thus, the agent module will use the obtained first output parameter as a return value of the agent module.

FIG. 3 is a schematic diagram illustrating configuration of a second embodiment of the device for implementing remote procedure call according to the present disclosure. In the second embodiment, the device is provided at the SDN controller, and as shown in FIG. 3, the device includes at least: a second transceiver module and a second conversion module. Here, the second transceiver module is configured to receive request information conforming to RPC from an APP client and convert the request information into a second input parameter in a preset protocol format.

In an embodiment, the preset protocol format may include, for example, protobuf, IDL, JSON, and the like. Parameters identifiable by the preset protocol format are basic types, such as one or any combination of character strings, integers, floating point numbers, bytes, and Boolean types, but do not include pointer types.

The second conversion module is configured to convert the second input parameter into a third input parameter of a service interface provided by the SDN controller where the second conversion module is located.

Here, the third input parameter of the service interface provided by the SDN controller conforms to the SDN controller programming language format.

In an embodiment, in the device shown in FIG. 3, the second conversion module is further configured to: convert a third output parameter from the SDN controller where the second conversion module is located as a reply to the request information into the second output parameter in the preset protocol format; and accordingly, the second transceiver module is further configured to: convert the second output parameter into reply information conforming to RPC and send the same to the client.

In an embodiment, the device shown in FIG. 3 further includes a registration module configured to register an RPC service in the SDN controller where the registration module is located, and start the RPC service when needed.

In an embodiment, the device shown in FIG. 3 further includes a monitoring module configured to monitor a port agreed with the client, and notify the second transceiver module of receiving information from the client when an information stream is detected on the port.

Through cooperative application of the devices in FIGs. 2 and 3, direct interaction between the APP and the SDN controller across programming languages is realized in the embodiments of the present disclosure. Moreover, the APP client automatically generates a client code without knowing an underlying network protocol or parsing the code, thereby making a network request processed by the SDN controller as simple as a local call method.

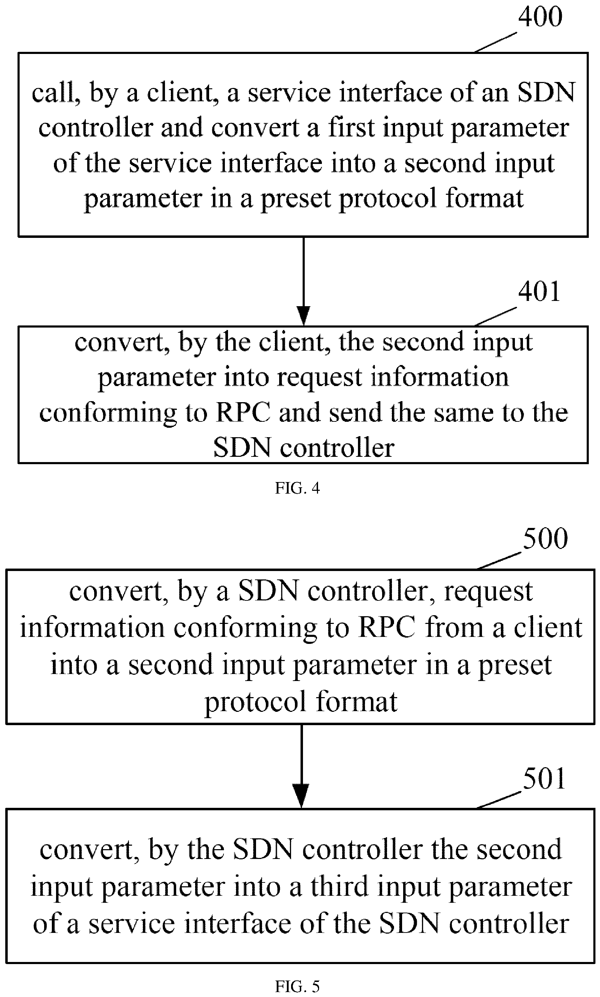

FIG. 4 is a flowchart of a first embodiment of a method for implementing remote procedure call according to the present disclosure. As shown in FIG. 4, the method includes the following steps 400 to 401.

At step 400: the client calls a service interface of an SDN controller and converts a first input parameter of the service interface into a second input parameter in a preset protocol format.

Here, the first input parameter of the service interface provided by the client conforms to an APP client programming language format.

In an embodiment, the preset protocol format may include, for example, protobuf, IDL, JSON, and the like. Parameters identifiable by the preset protocol format are basic types, such as one or any combination of character strings, integers, floating point numbers, bytes, and Boolean types, but do not include pointer types.

At step 401: the client converts the second input parameter into request information conforming to RPC and sends the same to the SDN controller.

In an embodiment, in the case that the client and the SDN controller are disposed on different physical devices, such as on different hosts, then the request information further includes: an address and an agreed port of the SDN controller.

In the embodiment shown in FIG. 4, the information conforming to the APP programming language format is converted into the preset protocol format to interact with the SDN controller, and the problem of interaction between the client and the SDN controller across programming languages is effectively solved.

In an embodiment, the method in FIG. 4 further includes: receiving, by the client, reply information conforming to RPC from the SDN controller and converting the reply information conforming to RPC into the second output parameter in the preset protocol format; and further converting, by the client, the second output parameter into the first output parameter conforming to an APP client programming language format as a return value.

In an embodiment of the present disclosure, there is further provided a computer readable storage medium having a computer executable instruction stored thereon, wherein the computer executable instruction is configured to cause any of the methods for implementing remote procedure call as shown in FIG. 4 according to the embodiments of the present disclosure to be performed.

In an embodiment of the present disclosure, there is further provided a device for implementing remote procedure call, including a processor, a storage, and a computer program stored in the storage and executable on the processor for: calling a service interface of an SDN controller, and converting a first input parameter of the service interface into a second input parameter in a preset protocol format; and converting the second input parameter into request information conforming to RPC and sending the same to the SDN controller.

That is, the processor is configured to, when executing the computer program, perform any of the methods for implementing remote procedure call at the client side as described above.

FIG. 5 is a flowchart of a second embodiment of a method for implementing remote procedure call according to the present disclosure. As shown in FIG. 5, the method includes the following steps 500 to 501.

At step 500: the SDN controller converts request information conforming to RPC from a client into a second input parameter in a preset protocol format.

In an embodiment, the preset protocol format may include, for example, protobuf, IDL, JSON, and the like. Parameters identifiable by the preset protocol format are basic types, such as one or any combination of character strings, integers, floating point numbers, bytes, and Boolean types, but do not include pointer types.

At step 501: the SDN controller converts the second input parameter into a third input parameter of a service interface of the SDN controller.

Here, the third input parameter of the service interface provided by the SDN controller conforms to the SDN controller programming language format.

In an embodiment, the embodiment of FIG. 5 further includes: the SDN controller converts a third output parameter as a reply to the request information into the second output parameter in the preset protocol format; and converts the second output parameter into reply information conforming to RPC and sends the same to the client.

In an embodiment, beforehand, the method according to the embodiment shown in FIG. 5 further includes: registering, by the SDN controller, an RPC service, and starting, by the SDN controller, the RPC service when needed.

In an embodiment, beforehand, the method according to the embodiment shown in FIG. 5 further includes: monitoring, by the SDN controller, a port agreed with the client, and receiving, by the SDN controller, information from the client when an information stream is detected on the port.

Through cooperative application of the methods in FIGs. 4 and 5, direct interaction between the client and the SDN controller across programming languages is realized in the embodiments of the present disclosure.

In an embodiment of the present disclosure, there is further provided a computer readable storage medium having a computer executable instruction stored thereon, wherein the computer executable instruction is configured to cause any of the methods for implementing remote procedure call as shown in FIG. 5 according to the embodiments of the present disclosure to be performed.

In an embodiment of the present disclosure, there is further provided a device for implementing remote procedure call, including a processor, a storage, and a computer program stored in the storage and executable on the processor for: converting request information conforming to RPC from an APP client into a second input parameter in a preset protocol format; and converting the second input parameter into a third input parameter of a service interface of the SDN controller.

That is, the processor is configured to, when executing the computer program, perform any of the methods for implementing remote procedure call at the SDN controller side as described above.

Implementations of the present disclosure will be described in detail below with reference to specific embodiments.

In a first embodiment, it is assumed that, an APP client provided on a client is developed with a programming language PYTHON (or another programming language), the SDN controller is developed with a programming language JAVA (or another programming language), and the client and the SDN controller run on the same host.

In the first embodiment, it is assumed that the APP client needs to call an interface of the SDN controller to query whether there is a reachable path between two network nodes. In this case, the input parameter of the APP client includes ID numbers of the two network nodes, e.g., 32-bit integer types, and the return value of the SDN controller is expected to include a path reachable value, e.g., of a Boolean type: yes or no.

The method for implementing remote procedure call provided in the embodiment of the present disclosure is as follows.

At the SDN controller, the method includes: registering an RPC service in the SDN controller, and starting the RPC Service for a path reachablity query in a component (bundle) under the case that the SDN controller conforms to an Open Service Gateway Initiative (OSGI) framework; and monitoring an agreed port with the APP client in the SDN controller, and receiving RPC information at the port, the agreed port number in the first embodiment is assumed to be 5001.

The input parameter in the first embodiment includes ID numbers of two network nodes of a 32-bit integer type, and the output parameter includes a path reachable value of a Boolean type, which are both basic types that can be directly identified by a preset protocol format.

For the received RPC request information, i.e., the input parameter of the ID numbers of the two network nodes, it is converted by the SDN controller into an input parameter of ID numbers of the two network nodes in an SDN controller programming language format, such as JAVA, according to a preset protocol format; and for the RPC reply information to be sent, an output parameter of a service interface provided by the SDN controller, i.e., a path reachable value of a Boolean type in a JAVA format, is converted into the RPC reply information according to the preset protocol format.

At the APP client, the method in the first embodiment includes: setting, in the APP client, a path reachablity query interface having the same input and output parameters in contents as the actual service interface of the SDN controller, the input parameter includes ID numbers of two network nodes of a 32-bit integer type, and the output parameter includes a path reachable value of a Boolean type, which are both basic types that can be directly identified by a preset protocol format.

For the RPC information to be sent, the input parameter of a service interface provided by the APP client, i.e., the ID numbers of the two network nodes, is converted into RPC request information according to the preset protocol format; and For the received RPC reply information, it is converted into a path reachable value of a Boolean type in an APP client programming language format, such as PYTHO, according to the preset protocol format.

The step of the APP client calling an interface of the SDN controller and querying whether a path between the two network nodes is reachable includes:
starting a registration module by the SDN controller, and starting an RPC service for path reachablity query in bundle through an OSGI framework; starting a monitoring module by the SDN controller to monitor an agreed port of the APP client and the SDN controller, and receiving RPC information, the agreed port number in the first embodiment is 5001;
developing the APP client with, for example, PYTHON, and calling an agent module for path reachablity query on the APP client, the input parameter including ID numbers of two network nodes; calling, by the APP client, a first conversion module to convert the input parameter of the request, i.e., the ID numbers of the two network nodes, into an input parameter in a preset protocol format; calling, by the APP client, a first transceiver module to convert the input parameter in the preset protocol format into RPC request information, and send the RPC request information to a designated address and port, e.g., 5001, of the SDN controller;
submitting, after detecting RPC information at the port 5001 by the monitoring module of the SDN controller, the received RPC information to a second transceiver module of the SDN controller; parsing, by the second transceiver module of the SDN controller, the RPC request information in the preset protocol format; converting, by the second conversion module of the SDN controller, the request information in the preset protocol format into an input parameter of the ID numbers of the two network nodes corresponding to an SDN controller programming language such as JAVA;
calling, by the SDN controller, a corresponding path reachablity query interface to operate, converting, by the second conversion module, a return value corresponding to the obtained input parameter, i.e., a path reachable value of a Boolean type, into an output parameter in the preset protocol format and converting, by the second transceiver module, the output parameter in the preset protocol format into reply information conforming to RPC and sending the same to the APP client;
receiving, by the first transceiver module of the APP client, the RPC information, parsing the RPC reply information, and converting the reply information conforming to RPC into an output parameter in the preset protocol format before submitting to the first conversion module of the APP client; converting, by the first conversion module of the APP client, the output parameter in the preset protocol format into an output parameter of a path reachable value of a Boolean type corresponding to the APP programming language such as PYTHON, and transmitting the output parameter to the agent module as a return value of the agent module.

In this manner, the APP client obtains a return value regarding whether a path between the two network nodes is reachable.

In a second embodiment, it is assumed that, an APP client provided on a client is developed with a programming language PYTHON, the SDN controller is developed with a programming language JAVA, and the client and the SDN controller run on the same host.

In the second embodiment, it is assumed that the APP client needs to call an interface of the SDN controller to query a path between two network nodes. In this case, the input parameter of the APP client includes ID numbers of the two network nodes, e.g., 32-bit integer types, and the return value of the SDN controller is expected to include a path reachable value and a path pointer. The path reachable value is a Boolean type that represents whether a path between two nodes is reachable. If the path is reachable, the path pointer points to a series of link IDs, such as a set of 32-bit integer types.

The second embodiment differs from the first embodiment mainly in that: the return value in the first embodiment is a Boolean type, which is a basic type and can be directly converted according to a preset protocol format; while the return value in the second embodiment is a combination of a basic type (Boolean type) and a pointer, in which the pointer type cannot be directly converted according to a preset protocol format.

Therefore, in the second embodiment, the implementation of protocol conversion on the SDN controller includes: converting the received RPC request information, i.e., the input parameter including the ID numbers of the two network nodes, into an input parameter of ID numbers of the two network nodes in a SDN controller programming language format, such as JAVA, according to a preset protocol format; and for the RPC reply information to be sent, regarding the output parameter of a service interface provided by the SDN controller, i.e., the combination of the path reachable value of a Boolean type and the pointer type path in a JAVA format: reading the Boolean type path reachable value in the JAVA format; and reading a value specifically pointing to a series of link IDs in the pointer type path in the JAVA format; combining the two types of values into a new data type, wherein the new data type is a combination of the basic types which can be identified by the preset protocol format, and then converting the data type into the parameter in the preset protocol format.

In the second embodiment, the specific implementation of protocol conversion on the APP client includes: for the RPC information to be sent, converting the input parameter of a service interface provided by the client, i.e., the input parameter including the ID numbers of the two network nodes, for example, programmed with PYTHON, into RPC request information according to a preset protocol format; and for the received RPC reply information having a data type as set on the SDN controller: firstly, converting it into a data type of a combination of the two types of values programmed with PYTHON according to the preset protocol format; then, reading a Boolean type path reachable value in a JAVA format; reading a value specifically pointing to a series of link IDs in a path combination, and constructing a pointer to point to the path combination; and combining the Boolean type path reachable value and pointer type path into a return value type of the agent module on the APP client.

Other specific implementation steps are the same as the first embodiment, and thus are not repeated here.

In a third embodiment, it is assumed that, an APP client provided on a client is developed with a programming language PYTHON, the SDN controller is developed with a programming language JAVA, and the client and the SDN controller run on different hosts.

In the third embodiment, the APP client needs to call an interface of the SDN controller to query a path between two network nodes. The input parameter of the APP client includes ID numbers of the two network nodes, e.g., 32-bit integer types, and the return value of the SDN controller is expected to include a path reachable value and a path pointer. The path reachable value is a Boolean type that represents whether a path between two nodes is reachable. If the path is reachable, the path pointer points specifically to a series of link IDs, such as a set of 32-bit integer types.

The third embodiment differs from the second embodiment mainly in that: the APP client and the SDN controller of the second embodiment run on the same host, while the APP client and the SDN controller of the third embodiment run on different hosts. Thus, for the third embodiment, in the process of the APP client calling the service interface of the SDN controller and querying the path between the two network nodes, it is designated in the request information that the address and the port of the SDN controller is an IP address and an agreed port corresponding to the SDN controller.

Other specific implementation steps are the same as the second embodiment, and thus are not repeated here.

In a fourth embodiment, it is assumed that, an APP client provided on a client is developed with a programming language PYTHON, the SDN controller is developed with a programming language JAVA, and the client and the SDN controller run on the same host.

In the fourth embodiment, it is assumed that the APP client needs to call an interface of the SDN controller to query whether there is a reachable path between multiple pairs of network nodes. In this case, the input parameter of the APP client includes ID numbers of the multiple pairs of network nodes, e.g., each pair of network nodes include two 32-bit integer types, and the return value of the SDN controller is expected to include a plurality of path reachable values, e.g., each path reachable value is a Boolean type: yes or no.

The fourth embodiment differs from the first embodiment mainly in that: the input parameter of the APP client in the first embodiment includes ID numbers of two network nodes, while the input parameter of the APP client in the fourth embodiment includes ID numbers of an indefinite number of network nodes; in addition, the return value in the first embodiment includes one path reachable value, while the return value in the fourth embodiment includes a number of path reachable values corresponding to the number of input parameters, that is, in the fourth embodiment, the interaction between the APP client and the SDN controller is full-duplex bidirectional data flow. Thus, for the fourth embodiment, before initiating the request information, the APP client needs to set the sending mode to a stream mode, and set an end mark when the sending is completed.

Since the return value sent to the APP client from the SDN controller is a data stream, the SDN controller needs to set the sending mode to a stream mode and send the return value in the stream mode, and set an end mark when the sending is completed.

Other specific implementation steps are the same as the first embodiment, and thus are not repeated here.

In the embodiments of the present disclosure, the efficiency of a large amount of bidirectional flow communication is improved.

The above are only exemplarily examples of the present disclosure and not intended to limit the scope of the present disclosure. Any amendments, equivalent substitutions, improvements, etc. within the principle of the present disclosure are all included in the scope of the protection defined by the appended claims of the present disclosure.

## Claims

1. A system for implementing remote procedure call, comprising a first device and a second device, wherein the first device comprises an agent module, a first conversion module and a first transceiver module, and the second device comprises a second transceiver module and a second conversion module; wherein
the agent module is configured to call a service interface of a Software Defined Networking, SDN, controller, and input and output parameters of the agent module are the same as actual service interface parameters of the SDN controller;
the first conversion module is configured to convert a first input parameter of a service interface provided by a client where the first conversion module is located into a second input parameter in a preset protocol format, the first input parameter conforming to an application, APP, client programming language format; and
the first transceiver module is configured to convert the second input parameter into request information conforming to a remote procedure call protocol, RPC, and send the request information to the SDN controller,
wherein the first transceiver module is further configured to: receive reply information conforming to RPC from the SDN controller and convert the reply information conforming to RPC into a second output parameter in the preset protocol format; and
the first conversion module is further configured to: convert the second output parameter into a first output parameter conforming to the APP client programming language format, and output the first output parameter to the agent module,
wherein
the second transceiver module is configured to receive the request information conforming to RPC from the client and convert the request information into the second input parameter in the preset protocol format; and
the second conversion module is configured to convert the second input parameter into a third input parameter conforming to a SDN controller programming language format of the service interface provided by the SDN controller where the second conversion module is located,
wherein the SDN controller programming language format is a format of a programming language for developing the SDN controller.

2. The system according to claim 1, wherein the client where the first device is located and the SDN controller are disposed on a same physical device or different physical devices; and
in a case where the client where the first device is located and the SDN controller are disposed on different physical devices, the request information further includes: an address and an agreed port of the SDN controller, wherein the agreed port is a preset port or a dynamically negotiated port.

3. The system according to claim 1 or 2, wherein the second device further comprises a monitoring module configured to monitor a port agreed with the client, and notify the second transceiver module of receiving information from the client when an information stream is detected on the port.

4. The system according to claim 1, 2 or 3, wherein the second conversion module is further configured to: convert a third output parameter from the SDN controller where the second conversion module is located as a reply to the request information into the second output parameter in the preset protocol format; and
the second transceiver module is further configured to: convert the second output parameter into the reply information conforming to RPC and send the reply information to the client.

5. A method for implementing remote procedure call, comprising:
calling (400), by a client, a service interface of a Software Defined Networking, SDN, controller and converting (400) a first input parameter of the service interface into a second input parameter in a preset protocol format; and
converting (401), by the client, the second input parameter into request information conforming to a remote procedure call protocol, RPC, and sending (401) the request information to the SDN controller;
receiving, by the client, reply information conforming to RPC from the SDN controller and converting the reply information conforming to RPC into a second output parameter in the preset protocol format; and
converting, by the client, the second output parameter into a first output parameter conforming to an application, APP, client programming language format as a return value,
wherein the method further comprises:
converting (500), by the SDN controller, the request information conforming to RPC from the client into the second input parameter in the preset protocol format; and
converting (501), by the SDN controller, the second input parameter into a third input parameter conforming to a SDN controller programming language format of the service interface of the SDN controller,
wherein the SDN controller programming language format is a format of a programming language for developing the SDN controller.

6. The method according to claim 5, wherein the client and the SDN controller are disposed on a same physical device or different physical devices; and
in a case where the client and the SDN controller are disposed on different physical devices, the request information further includes: an address and an agreed port of the SDN controller, wherein the agreed port is a preset port or a dynamically negotiated port.

7. The method according to claim 5 or 6, wherein beforehand, the method further comprises:
monitoring, by the SDN controller, a port agreed with the client, and receiving information from the client when an information stream is detected on the port.

8. The method according to claim 5, 6 or 7, wherein the method further comprises:
converting, by the SDN controller, a third output parameter as a reply to the request information into the second output parameter in the preset protocol format; and
converting the second output parameter into the reply information conforming to RPC and sending the reply information to the client.

9. A computer readable storage medium having a computer executable instruction stored thereon, wherein the computer executable instruction is configured to cause the method for implementing remote procedure call according to any one of claims 5 to 8 to be performed.

## Patentansprüche

1. System zum Implementieren eines Fernprozeduranrufs, das eine erste Vorrichtung und eine zweite Vorrichtung umfasst, wobei die erste Vorrichtung ein Agentenmodul, ein erstes Umwandlungsmodul und ein erstes Sendeempfängermodul umfasst und die zweite Vorrichtung ein zweites Sendeempfängermodul und ein zweites Umwandlungsmodul umfasst; wobei
das Agentenmodul konfiguriert ist, um eine Serviceschnittstelle einer Software-Defined-Networking-Steuerung, SDN-Steuerung, anzurufen, und Eingabe- und Ausgabeparameter des Agentenmoduls die gleichen sind wie tatsächliche Serviceschnittstellenparameter der SDN-Steuerung;
das erste Umwandlungsmodul konfiguriert ist, um einen ersten Eingabeparameter einer Serviceschnittstelle, die von einem Client bereitgestellt wird, wo sich das erste Umwandlungsmodul befindet, in einen zweiten Eingabeparameter in einem voreingestellten Protokollformat umzuwandeln, wobei der erste Eingabeparameter einem Anwendungs-, APP,-Clientprogrammiersprachenformat, entspricht; und
das erste Sendeempfängermodul konfiguriert ist, um den zweiten Eingabeparameter in Anforderungsinformationen umzuwandeln, die einem Fernprozeduranrufprotokoll, RPC, entsprechen, und die Anforderungsinformationen an die SDN-Steuerung zu senden,
wobei das erste Sendeempfängermodul ferner konfiguriert ist, um:
Antwortinformationen, die dem RPC entsprechen, von der SDN-Steuerung zu empfangen und die Antwortinformationen, die dem RPC entsprechen, in einen zweiten Ausgabeparameter in dem voreingestellten Protokollformat umzuwandeln; und
das erste Umwandlungsmodul ferner konfiguriert ist, um: den zweiten Ausgabeparameter in einen ersten Ausgabeparameter umzuwandeln, der dem APP-Clientprogrammiersprachenformat entspricht, und den ersten Ausgabeparameter an das Agentenmodul auszugeben,
wobei
das zweite Sendeempfängermodul konfiguriert ist, um die Anforderungsinformationen, die dem RPC entsprechen, von dem Client zu empfangen und die Anforderungsinformationen in den zweiten Eingabeparameter in dem voreingestellten Protokollformat umzuwandeln; und
das zweite Umwandlungsmodul konfiguriert ist, um den zweiten Eingabeparameter in einen dritten Eingabeparameter umzuwandeln, der einem SDN-Steuerungsprogrammiersprachenformat der Serviceschnittstelle entspricht, die von der SDN-Steuerung bereitgestellt wird, wo sich das zweite Umwandlungsmodul befindet,
wobei das SDN-Steuerungsprogrammiersprachenformat ein Format einer Programmiersprache zum Entwickeln der SDN-Steuerung ist.

2. System nach Anspruch 1, wobei der Client, wo sich die erste Vorrichtung befindet, und die SDN-Steuerung auf derselben physischen Vorrichtung oder verschiedenen physischen Vorrichtungen angeordnet sind; und
in einem Fall, in dem der Client, wo sich die erste Vorrichtung befindet, und die SDN-Steuerung auf verschiedenen physischen Vorrichtungen angeordnet sind, die Anforderungsinformationen ferner Folgendes umfassen: eine Adresse und einen vereinbarten Anschluss der SDN-Steuerung, wobei der vereinbarte Anschluss ein voreingestellter Anschluss oder ein dynamisch ausgehandelter Anschluss ist.

3. System nach Anspruch 1 oder 2, wobei die zweite Vorrichtung ferner ein Überwachungsmodul umfasst, das konfiguriert ist, um einen mit dem Client vereinbarten Anschluss zu überwachen und das zweite Sendeempfängermodul über das Empfangen von Informationen von dem Client zu benachrichtigen, wenn ein Informationsstrom an dem Anschluss detektiert wird.

4. System nach Anspruch 1, 2 oder 3, wobei das zweite Umwandlungsmodul ferner konfiguriert ist, um: einen dritten Ausgabeparameter von der SDN-Steuerung, wo sich das zweite Umwandlungsmodul befindet, als eine Antwort auf die Anforderungsinformationen in den zweiten Ausgabeparameter in dem voreingestellten Protokollformat umzuwandeln; und
das zweite Sendeempfängermodul ferner konfiguriert ist, um: den zweiten Ausgabeparameter in die Antwortinformationen umzuwandeln, die dem RPC entsprechen, und die Antwortinformationen an den Client zu senden.

5. Verfahren zum Implementieren eines Fernprozeduranrufs, das Folgendes umfasst:
Anrufen (400), durch einen Client, einer Serviceschnittstelle einer Software-Defined-Networking-Steuerung, SDN-Steuerung, und Umwandeln (400) eines ersten Eingabeparameters der Serviceschnittstelle in einen zweiten Eingabeparameter in einem voreingestellten Protokollformat; und
Umwandeln (401), durch den Client, des zweiten Eingabeparameters in Anforderungsinformationen, die einem Fernprozeduranrufprotokoll, RPC, entsprechen, und Senden (401) der Anforderungsinformationen an die SDN-Steuerung;
Empfangen, durch den Client, von Antwortinformationen, die dem RPC entsprechen, von der SDN-Steuerung und Umwandeln der Antwortinformationen, die dem RPC entsprechen, in einen zweiten Ausgabeparameter in dem voreingestellten Protokollformat; und
Umwandeln, durch den Client, des zweiten Ausgabeparameters in einen ersten Ausgabeparameter, der einem Anwendungs-, APP,-Clientprogrammiersprachenformat entspricht, als Rückgabewert,
wobei das Verfahren ferner Folgendes umfasst:
Umwandeln (500), durch die SDN-Steuerung, der Anforderungsinformationen, die dem RPC entsprechen, von dem Client in den zweiten Eingabeparameter in dem voreingestellten Protokollformat; und
Umwandeln (501), durch die SDN-Steuerung, des zweiten Eingabeparameters in einen dritten Eingabeparameter, der einem SDN-Steuerungsprogrammiersprachenformat der Serviceschnittstelle der SDN-Steuerung entspricht,
wobei das SDN-Steuerungsprogrammiersprachenformat ein Format einer Programmiersprache zum Entwickeln der SDN-Steuerung ist.

6. Verfahren nach Anspruch 5, wobei der Client und die SDN-Steuerung auf derselben physischen Vorrichtung oder verschiedenen physischen Vorrichtungen angeordnet sind; und
in einem Fall, in dem der Client und die SDN-Steuerung auf verschiedenen physischen Vorrichtungen angeordnet sind, die Anforderungsinformationen ferner Folgendes umfassen: eine Adresse und einen vereinbarten Anschluss der SDN-Steuerung, wobei der vereinbarte Anschluss ein voreingestellter Anschluss oder ein dynamisch ausgehandelter Anschluss ist.

7. Verfahren nach Anspruch 5 oder 6, wobei das Verfahren im Voraus ferner Folgendes umfasst:
Überwachen, durch die SDN-Steuerung, eines mit dem Client vereinbarten Anschlusses und Empfangen von Informationen von dem Client, wenn ein Informationsstrom an dem Anschluss detektiert wird.

8. Verfahren nach Anspruch 5, 6 oder 7, wobei das Verfahren ferner Folgendes umfasst:
Umwandeln, durch die SDN-Steuerung, eines dritten Ausgabeparameters als eine Antwort auf die Anforderungsinformationen in den zweiten Ausgabeparameter in dem voreingestellten Protokollformat; und
Umwandeln des zweiten Ausgabeparameters in die Antwortinformationen, die dem RPC entsprechen, und Senden der Antwortinformationen an den Client.

9. Computerlesbares Speichermedium, auf dem eine computerausführbare Anweisung gespeichert ist, wobei die computerausführbare Anweisung konfiguriert ist, um das Verfahren zum Implementieren eines Fernprozeduranrufs nach einem der Ansprüche 5 bis 8 zum Durchführen zu veranlassen.

## Revendications

1. Système pour mettre en œuvre un appel de procédure à distance, comprenant un premier dispositif et un second dispositif, dans lequel le premier dispositif comprend un module d'agent, un premier module de conversion et un premier module d'émetteur-récepteur, et le second dispositif comprend un second module d'émetteur-récepteur et un second module de conversion ; dans lequel
le module d'agent est configuré pour appeler une interface de service d'un contrôleur de réseautage défini par logiciel, SDN, et des paramètres d'entrée et de sortie du module d'agent sont les mêmes que des paramètres d'interface de service réels du contrôleur SDN ;
le premier module de conversion est configuré pour convertir un premier paramètre d'entrée d'une interface de service fournie par un client où le premier module de conversion est localisé en un second paramètre d'entrée dans un format de protocole prédéfini, le premier paramètre d'entrée étant conforme à un format de langage de programmation de client d'application, APP ; et
le premier module d'émetteur-récepteur est configuré pour convertir le second paramètre d'entrée en informations de demande conformes à un protocole d'appel de procédure à distance, RPC, et envoyer les informations de demande au contrôleur SDN,
dans lequel le premier module d'émetteur-récepteur est en outre configuré pour : recevoir des informations de réponse conformes au RPC du contrôleur SDN et convertir les informations de réponse conformes au RPC en un second paramètre de sortie dans le format de protocole prédéfini ; et
le premier module de conversion est en outre configuré pour :
convertir le second paramètre de sortie en un premier paramètre de sortie conforme au format de langage de programmation de client APP, et délivrer le premier paramètre de sortie au module d'agent,
dans lequel
le second module d'émetteur-récepteur est configuré pour recevoir les informations de demande conformes au RPC du client et convertir les informations de demande en le second paramètre d'entrée dans le format de protocole prédéfini ; et
le second module de conversion est configuré pour convertir le deuxième paramètre d'entrée en un troisième paramètre d'entrée conforme à un format de langage de programmation de contrôleur SDN de l'interface de service fournie par le contrôleur SDN où le second module de conversion est localisé,
dans lequel le format de langage de programmation de contrôleur SDN est un format d'un langage de programmation pour développer le contrôleur SDN.

2. Système selon la revendication 1, dans lequel le client où le premier dispositif est localisé et le contrôleur SDN sont disposés sur un même dispositif physique ou des dispositifs physiques différents ; et
dans un cas où le client où le premier dispositif est localisé et le contrôleur SDN sont disposés sur des dispositifs physiques différents, les informations de demande comprennent en outre : une adresse et un port convenu du contrôleur SDN, dans lequel le port convenu est un port prédéfini ou un port négocié dynamiquement.

3. Système selon la revendication 1 ou 2, dans lequel le second dispositif comprend en outre un module de surveillance configuré pour surveiller un port convenu avec le client, et notifier au second module d'émetteur-récepteur de recevoir des informations du client lorsqu'un flux d'informations est détecté sur le port.

4. Système selon la revendication 1, 2 ou 3, dans lequel le second module de conversion est en outre configuré pour : convertir un troisième paramètre de sortie du contrôleur SDN où le second module de conversion est localisé en tant que réponse aux informations de demande en le deuxième paramètre de sortie dans le format de protocole prédéfini ; et
le second module d'émetteur-récepteur est en outre configuré pour : convertir le deuxième paramètre de sortie en les informations de réponse conformes au RPC et envoyer les informations de réponse au client.

5. Procédé pour mettre en œuvre un appel de procédure à distance, comprenant :
appeler (400), par un client, une interface de service d'un contrôleur de réseautage défini par logiciel, SDN, et convertir (400) un premier paramètre d'entrée de l'interface de service en un deuxième paramètre d'entrée dans un format de protocole prédéfini ; et
convertir (401), par le client, le deuxième paramètre d'entrée en informations de demande conformes à un protocole d'appel de procédure à distance, RPC, et envoyer (401) les informations de demande au contrôleur SDN ;
recevoir, par le client, des informations de réponse conformes au RPC du contrôleur SDN et convertir les informations de réponse conformes au RPC en un deuxième paramètre de sortie dans le format de protocole prédéfini ; et
convertir, par le client, le deuxième paramètre de sortie en un premier paramètre de sortie conforme à un format de langage de programmation de client d'application, APP, en tant que valeur de retour,
dans lequel le procédé comprend en outre :
convertir (500), par le contrôleur SDN, les informations de demande conformes au RPC du client en le deuxième paramètre d'entrée dans le format de protocole prédéfini ; et
convertir (501), par le contrôleur SDN, le deuxième paramètre d'entrée en un troisième paramètre d'entrée conforme à un format de langage de programmation de contrôleur SDN de l'interface de service du contrôleur SDN,
dans lequel le format de langage de programmation de contrôleur SDN est un format d'un langage de programmation pour développer le contrôleur SDN.

6. Procédé selon la revendication 5, dans lequel le client et le contrôleur SDN sont disposés sur un même dispositif physique ou des dispositifs physiques différents ; et
dans un cas où le client et le contrôleur SDN sont disposés sur des dispositifs physiques différents, les informations de demande comprennent en outre : une adresse et un port convenu du contrôleur SDN, dans lequel le port convenu est un port prédéfini ou un port négocié dynamiquement.

7. Procédé selon la revendication 5 ou 6, dans lequel au préalable, le procédé comprend en outre :
surveiller, par le contrôleur SDN, un port convenu avec le client, et recevoir des informations du client lorsqu'un flux d'informations est détecté sur le port.

8. Procédé selon la revendication 5, 6 ou 7, dans lequel le procédé comprend en outre :
convertir, par le contrôleur SDN, un troisième paramètre de sortie en tant que réponse aux informations de demande en le deuxième paramètre de sortie dans le format de protocole prédéfini ; et
convertir le deuxième paramètre de sortie en les informations de réponse conformes au RPC et envoyer les informations de réponse au client.

9. Moyen de stockage lisible par ordinateur sur lequel est stockée une instruction exécutable par ordinateur, dans lequel l'instruction exécutable par ordinateur est configurée pour amener le procédé pour mettre en œuvre un appel de procédure à distance selon l'une quelconque des revendications 5 à 8 à être réalisé.
